(19) Europäisches Patentamt
European Patent Office
Office européen des brevets

(11) EP 3 145 997 B1

(12) **EUROPEAN PATENT SPECIFICATION**

(45) Date of publication and mention of the grant of the patent:
**12.07.2023 Bulletin 2023/28**

(21) Application number: **15726030.8**

(22) Date of filing: **18.05.2015**

(51) International Patent Classification (IPC):
***C09B 69/10*** (2006.01) ***C09K 19/38*** (2006.01)
***C09K 19/60*** (2006.01) ***C09B 1/22*** (2006.01)
***C09B 1/473*** (2006.01) ***C09B 1/58*** (2006.01)

(52) Cooperative Patent Classification (CPC):
**C09B 69/101; C09B 1/22; C09B 1/473; C09B 1/585; C09K 19/3861; C09K 19/586; C09K 19/603;** C09K 2019/0448; C09K 2219/03

(86) International application number:
**PCT/EP2015/060833**

(87) International publication number:
**WO 2015/177062 (26.11.2015 Gazette 2015/47)**

(54) **POLYMERIZABLE DICHROIC DYES**

POLYMERISIERBARE DICHROITISCHE FARBSTOFFE

COLORANTS DICHROÏQUES POLYMÉRISABLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.05.2014 EP 14169195**

(43) Date of publication of application:
**29.03.2017 Bulletin 2017/13**

(73) Proprietor: **ROLIC Technologies AG**
**4123 Allschwill (CH)**

(72) Inventors:
- **KLEIN, Cédric**
  **68420 Herrlisheim-près-Colmar (FR)**
- **LINCKER, Frédéric**
  **67300 Schiltigheim (FR)**
- **REVEAUD, Frédéric**
  **68100 Mulhouse (FR)**

(74) Representative: **Veenstra, Eva et al**
**Rolic Technologies Ltd.**
**Patent Department**
**Gewerbestrasse 18**
**4123 Allschwil (CH)**

(56) References cited:
**EP-A1- 0 422 538**
**EP-A1- 0 799 864**
**EP-A1- 1 256 602**
**EP-A1- 1 304 360**
**EP-A1- 1 593 713**
**EP-A1- 1 739 141**
**EP-A1- 2 330 161**
**EP-A1- 2 514 791**
**EP-A2- 0 260 687**
**EP-A2- 0 371 782**
**WO-A1-2010/089059**
**WO-A1-2013/047860**
**WO-A2-02/12400**
**WO-A2-02/12401**
**DE-B- 1 136 302**
**GB-A- 877 402**
**US-A- 6 160 597**
**US-A1- 2005 049 425**
**US-A1- 2011 149 128**
**US-A1- 2012 235 099**
**US-A1- 2012 242 940**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 145 997 B1

## Description

The present invention relates to new dichroic dyes, their composition with slave materials and their use for a dichroic polymer network, a dichroic liquid crystalline polymer film (LCP film) or a dichroic liquid crystalline polymer gel, which for instance find application as electro-optical or optical devices.

EP 1 256 602 describes a mesogenic, crosslinkable mixture comprising at least one polymerizable liquid crystal and at least one polymerizable dichroic dye comprising azo- and anthraquinone chromophores.

US 2055/049425 describes red anthraquinone colorant containing one or more ethylenically-unsaturated (e.g., vinyl), photopolymerizable radicals and their compositions, which may be suitable for use in coatings that are applied to wood, glass, paper, metal, thermoplastics and the like.

The present invention relates to a composition comprising a dichroic dye of formula (I) and at least one slave material which is a liquid crystal or polymerizable liquid crystal,

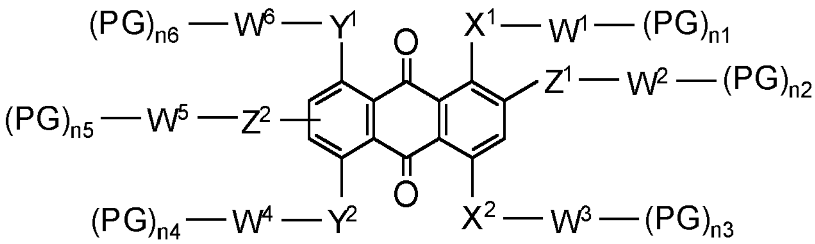

(I)

wherein

$X^2$, $X^1$ are independently from each other NR,
R represents hydrogen, unbranched or branched $C_1$-$C_8$alkyl,
$Y^1$, $Y^2$ independently from each other are a single bond,
$Z^1$ is O,
$Z^2$ is a single bond,
n2 is 1,
n1, n3, n4, n5, n6 are 0,
$W^1$, $W^4$, $W^5$, $W^6$ are hydrogen
$W^2$, $W^3$ are independently from each other are unsubstituted or substituted, straight chain or branched $C_1$-$C_{30}$ alkyl, in which one -CH- or -$CH_2$- group may be replaced by one or more linking group consisting of -O-, -S-, -$NR^1$-, -CH($OR^1$)-, -CO-$NR^1$-, -$NR^1$-CO-, -CO-O-, -O-CO-, -$SO_2$- or an aromatic group which is unsubstituted or substituted by one or more straight chain or branched lower alkyl radical, -F, -Cl or - $OR^1$; straight chain or branched, unsubstituted $C_1$-$C_8$ alkyl, or straight chain or branched $C_1$-$C_8$ alkyl, which is substituted by one or more cyano group, one or more hydroxyl group or one or more halogen atoms, and wherein
$R^1$ is hydrogen or straight chain or branched, unsubstituted $C_1$-$C_8$alkyl, or $C_1$-$C_8$alkyl, which is substituted by one or more cyano group, one or more hydroxyl group or one or more halogen atoms,
PG is a polymerizable group consisting of $CH_2$=CQ-COO-, wherein Q is hydrogen or methyl; or
a dichroic dye of formula (I), wherein
$X^1$ is S
$X^2$ is single bond or NR,
R represents hydrogen or straight chain or branched, unsubstituted $C_1$-$C_8$ alkyl, or $C_1$-$C_6$alkyl, which is substituted by one or more cyano group, one or more hydroxyl group or one or more halogen atoms,
$Y^1$ is S,
$Y^2$ is a single bond or NR,
$Z^1$ , $Z^2$ are single bond,
n1, n6 are 1,
n2, n3, n4, n5, are 0,
$W^2$, $W^3$, $W^4$, $W^5$ are hydrogen
$W^1$, $W^6$ are independently from each other are unsubstituted or substituted, straight chain or branched $C_1$-$C_{30}$ alkyl, in which one -CH- or -$CH_2$- group may be replaced by one or more linking group consisting of -O-, -S-, -$NR^1$-, -CH($OR^1$)-, -CO-$NR^1$-,
-$NR^1$-CO-, -CO-O-, -O-CO-, -$SO_2$- or an aromatic group which is unsubstituted or substituted by one or more straight chain or branched $C_1$-$C_8$alkyl, -F, -Cl or -$OR^1$, and wherein
$R^1$ represents hydrogen, or straight chain or branched, unsubstituted $C_1$-$C_8$ alkyl, or $C_1$-$C_6$ alkyl, which is substituted

by one or more cyano group, one or more hydroxyl group or one or more halogen atoms,
PG is a polymerizable group consisting of $CH_2$=CQ-COO-, wherein Q is hydrogen or methyl; or
a dichroic dye of formula (I), wherein
$X^1$, $X^2$ are independently from each other NR
$Y^1$, $Y^2$ are independently from each other NR,
R represents hydrogen, or straight chain or branched, unsubstituted $C_1$-$C_8$ alkyl, or $C_1$-$C_6$ alkyl, which is substituted by one or more cyano group, one or more hydroxyl group or one or more halogen atoms,
$Z^1$, $Z^2$ are independently from each other a single bond or O,
n2, n5 are 1,
n1, n3, n4, n6, are 0,
$W^1$, $W^6$ are hydrogen,
$W^2$, $W^3$ $W^4$, $W^5$ are independently from each other unsubstituted or substituted, straight chain or branched $C_1$-$C_{30}$ alkyl, in which one -CH- or -$CH_2$- group may be replaced by one or more linking group consisting of -O-, -S-, -$NR^1$-, -CH($OR^1$)-, -CO-$NR^1$-, -$NR^1$-CO-, -CO-O-, -O-CO-, -$SO_2$- or an aromatic group which is unsubstituted or substituted by one or more -F, -Cl or -OR' , or straight chain or branched, unsubstituted $C_1$-$C_8$ alkyl, or $C_1$-$C_8$ alkyl, which is substituted by one or more cyano group, one or more hydroxyl group or one or more halogen atoms, and wherein
$R^1$ represents hydrogen, straight chain or branched $C_1$-$C_8$ alkyl,
PG is a polymerizable group consisting of $CH_2$=CQ-COO-, wherein Q is hydrogen or methyl,
with the proviso that oxygen atoms of the linking groups are not directly linked to each other.

It is understood that the term "aromatic" includes optionally substituted carbocyclic and heterocyclic groups comprising five-, six- or ten- membered ring systems, such as furane, benzene, pyridine, pyrimidine, naphthalene or tetraline units. In the scope of the present invention, preferred aromatic ring is selected from the group consisting of benzene, naphthalene or tetraline, even more preferred aromatic ring is benzene.

It is understood that the term "alicyclic" includes non-aromatic carbocyclic or heterocyclic ring systems having 3 to 10 carbon atoms, such as cyclopropane, cyclobutane, cyclopentane, cyclopentene, cyclohexane, cyclohexene, 1,3 dioxane, cyclohexadiene and decaline. In the scope of the present invention, preferred alicyclic ring is selected from the group consisting of cyclobutane, cyclopentane, cyclopentene, cyclohexane or cyclohexene, even more preferred alicyclic ring is cyclohexane.

It is understood that the phrase "straight chain or branched $C_1$-$C_{30}$ alkyl radical" includes groups selected from the group comprising methyl, ethyl, propyl, isopropyl, butyl, isobutyl, sec-butyl, tert-butyl, pentyl, isopentyl, cyclopentyl, hexyl, cyclohexyl, heptyl, octyl, nonyl, decyl, 3-methylpentyl, methoxy, ethoxy, propoxy, isopropoxy, butoxy, isobutoxy, sec-butoxy, tert-butoxy, pentyloxy, isopentyloxy, cyclopentyloxy, hexyloxy, cyclohexyloxy, heptyloxy, octyloxy, nonyloxy, 3-methylpentyloxy, methoxycarbonyl, ethoxycarbonyl, propoxycarbonyl, isopropoxycarbonyl, butoxycarbonyl, isobutoxycarbonyl, sec-butoxy-carbonyl, tert-butoxy-carbonyl, pentyloxycarbonyl, isopentyloxycarbonyl, , hexyloxycarbonyl, , octyloxycarbonyl, nonyloxycarbonyl, 3-methylpentyloxycarbonyl, , acetoxy, ethylcarbonyloxy, propylcarbonyloxy, isopropylcarbonyloxy, butylcarbonyloxy, isobutylcarbonyloxy, sec-butylcarbonyloxy, tert-butylcarbonyloxy, pentylcarbonyloxy, isopentylcarbonyloxy, hexyl-carbonyloxy, octylcarbonyloxy, nonylcarbonyloxy, 3-methylpentylcarbonyloxy, , acetyl, ethylcarbonyl, propylcarbonyl, isopropylcarbonyl, butylcarbonyl, isobutylcarbonyl, sec-butylcarbonyl, pentylcarbonyl, isopentylcarbonyl, cyclohexylcarbonyl, octyl, carbonyl, nonylcarbonyl, methoxyacetoxy, 1-methoxy-2-propoxy, 3-methoxy-1-propoxy, 2-methoxyethoxy, 2-isopropoxyethoxy, 1-ethoxy-3-pentyloxy, , 6-propyloxyhexyl, 6-propyl-oxyhexyloxy, 2-fluoroethyl, trifluoromethyl, 2,2,2-trifluoroethyl, 1H,1H-pentadecafluorooctyl, 1H,1H,7H-dodecafluoroheptyl, 2-(perfluorooctyl)ethyl, 2-(perfluorobutyl)ethyl, 2-(perfluorohexyl)ethyl, 2-(perfluorodecyl)ethyl, perfluoropropyl, perfluorobutyl, perfluoroheptyl, perfluorooctyl, perfluorononyl, 1-fluoropropoxy, 1-fluoropentyloxy, 2-fluoropropoxy, 2,2-difluoropropoxy, 3-fluoropropoxy, 3,3-difluoropropoxy, 3,3,3-trifluoropropoxy, trifluoromethoxy or variations thereof.

The term "lower alkyl or lower alkyl radical", as used in the context of the present invention is selected from the group consisting of straight chain or branched, r straight-chain, optionally substituted by one or more cyano group, one or more hydroxyl group or one or more halogen atoms $C_1$-$C_8$ alkyl radical. Preferred lower $C_1$-$C_8$ alkyl radical is selected from the group consisting of methyl, ethyl,2-cyanoethyl, 2-hydroxyethyl, propyl, isopropyl, 2-hydroxypropyl, butyl, isobutyl, sec-butyl, tert-butyl, pentyl, isopentyl, neopentyl, , hexyl, cyclohexyl, 3-metylpentyl, heptyl, octyl, 2-ethylhexyl, 2-fluoroethyl, trifluoromethyl, 2,2,2-trifluoroethyl, 2-(perfluorobutyl)ethyl, 2-(perfluorohexyl)ethyl, perfluoropropyl, perfluorobutyl, perfluoropentyl, perfluorohexyl, perfluoroheptyl, perfluorooctyl and the like, more preferred lower $C_1$-$C_8$ alkyl radical is selected from the group consisting of methyl, ethyl, propyl, isopropyl, butyl, isobutyl, sec-butyl, tert-butyl, hexyl, octyl, 2-ethylhexyl, trifluoromethyl, 2-(perfluorohexyl)ethyl, perfluoropropyl, perfluorobutyl and the like, even more preferred lower $C_1$-$C_8$ alkyl radical is selected from the group consisting of methyl, ethyl, propyl, isopropyl, butyl, hexyl, , 2-ethylhexyl, trifluoromethyl, 2-(perfluorohexyl)ethyl, perfluoropropyl and the like.

Preferred the term "lower alkyl" includes straight chain and branched hydrocarbon radicals having 1 to 6 carbon atoms, preferably 1 to 3 carbon atoms. Methyl, ethyl, propyl and isopropyl groups are especially preferred.

More preferably, the term "lower acyl" includes acetyl, propionyl, butyryl and isobutyryl groups. Acetyl is especially preferred.

It is understood that the term "halogen" includes fluoro, chloro, bromo and iodo, preferably fluoro and chloro.

It is understood that the term "optionally substituted" includes optionally mono-substituted by lower alkyl, nitro, cyano or halogen or poly-substituted by lower alkyl and/or cyano and/or halogen.

Further the present invention relates to a composition, preferably a slave composition, more preferably a liquid crystalline composition, comprising at least one dichroic dye (I) as described above within the given preferences, and at least one slave material, preferably a liquid crystal material or a polymerizable liquid crystal.

In the context of the present application, a "slave material" shall refer to any material that has the capability to establish anisotropy upon contact with an aligned material, preferably photo-aligned material. The nature of the anisotropy in the aligned material and in the slave material may be different from each other. For example, the slave material may exhibit light absorption anisotropy for visible light and therefore can act as a polarizer, whereas the anisotropy of the aligned material may only be related to the molecular orientation.

A slave material may comprise polymerizable and/or non-polymerizable compounds. Within the context of the present application the terms "polymerizable" and "polymerized" shall include the meaning of "cross-linkable" and "cross-linked", respectively. Likewise, "polymerization" shall include the meaning of "cross-linking".

Preferably, the slave material is a self-organizing material. More preferred is that the slave material is a liquid crystal material and in particular preferred is that the slave material is a liquid crystal polymer material.

In the context of the present application, a "slave composition" shall refer to a composition comprising a slave material.

Polymerizable liquid crystals (LCP) which are present in the inventive compositions are well known to the skilled person e.g. from EP 0331233 , WO 95/24454, US 5,567,349,

US 5,650,534, WO 00/04110, WO 00/07975, WO 00/48985, WO 00/55110, WO 00/63154 and WO 2011003846. For adjustment of liquid crystalline properties and suppression of crystallization, mixtures of two or more LCP components may be used. At least one of the LCP components may optionally comprise more than one polymerizable group in the chemical structure in order to achieve cross-linking. As an alternative or to improve cross-linking abilities the addition of isotropic compounds comprising two or more polymerizable groups, so called cross-linkers, may also be possible. Furthermore well -known additives such as, e.g. phenol derivatives for stabilization and photoinitiators such as, e.g. Irgacure® may also be present in the inventive mixture.

The number of dichroic dyes of formula (I) present in the composition may depend mainly on the spectral working range of the polarizer and on the solubility of the dyes. Colored polarizers, which are absorbing in a selective spectral range or the whole visible range may preferably be achieved by the presence of one or more dyes in the composition.

Preferred composition of the invention consequently comprise at least one polymerizable dichroic dye according to the general formula (I), at least one polymerizable liquid crystal and optionally additives, such as cross-linkers, stabilizers and photoinitiator.

Particularly preferred are compositions comprising one to four dichroic dyes of formula (I) and at least one polymerizable liquid crystal and optionally additives such as cross-linkers, stabilizers and photoinitiators.

In a further embodiment the compositions of the invention may comprise in addition another dichroic or non-dichroic dye, which resulting mixture may be used as a dichroic dye of a desired color hue. No limitation is imposed in this context.

The total content of dichroic dyes of formula (I) in the inventive composition may depend on different factors such as solubility in the LCP host, influence on the liquid crystalline properties (e.g. depression of clearing point) and absorption ability (extinction) of the dyes involved. Preferred dye concentrations may be in the range of 0.1 to 50 wt %, more preferably from 0.5 to 30 wt %, most preferably from 0.5 to 20 wt %.

The dichroic dyes (I) according to the invention are also of value in the manufacture of dyed cholesteric layers. When added to a cholesteric mixture the dichroic dyes according to the invention are able to contribute to the enhancement of special color effects and therefore their further use in the formation of dyed cholesteric devices is an additional and valuable asset.

Thus in a preferred embodiment, compositions of the invention as described hereinabove may further comprise at least one chiral polymerizable liquid crystalline compound or at least one chiral component, to induce a cholesteric phase for the creation of dyed cholesteric layers.

In a further aspect the invention also provides the use of said composition for the preparation of a dichroic polymer network, a dichroic liquid crystalline polymer film (LCP film) or a dichroic liquid crystalline polymer gel.

In addition, the present invention relates to a process for the preparation of a dichroic polymer network, a dichroic liquid crystalline polymer film (LCP film) or a dichroic liquid crystalline polymer gel, which process comprises polymerizing a dichroic dye or a composition of the present invention.

Thus, in a further aspect the invention provides a dichroic polymer network, a dichroic liquid crystalline polymer

film (LCP film) or a dichroic liquid crystalline polymer gel comprising dichroic dyes and/or compositions according to the present invention. Such dichroic polymer network, a dichroic liquid crystalline polymer film (LCP film) or a dichroic liquid crystalline polymer gel may readily be prepared by UV or thermal polymerization of the mixtures of the present invention. A film comprising a composition according to the present invention is formed on a substrate, for example, by first preparing a solution of a composition, which is subsequently applied to a support by different coating techniques, such as spin coating, dip coating, meniscus coating, wire coating, slot coating, offset printing, inkjet printing, flexo printing, gravure printing. After evaporation of the solvent the obtained film is polymerized using UV light to give a cross-linked dichroic liquid crystal film of preferably 0.1 to 100 μm thickness, more preferable 0.2 to 50 μm thickness, even more preferable 0.5 to 20 μm thickness. If required such films may further be coated with other layers, such as, e.g. protective layers for protection against oxygen, UV-irradiation or mechanical stress. Such films may be used in the manufacture of devices such as polarizers or optical filters.

Examples of substrates used in the preparation of dichroic LCP films may include transparent substrates, such as glass or plastic including an orientation layer, which is able to induce a uniform orientation to the mixture. Such orientation layers may include rubbed polyimide, or polyamide or preferably layers of photo-orientable materials. A well-suited kind of photo-orientable orientation layers are Linearly Photopolymerizable Polymers (LPP), also sometimes referred to as Light Controlled Molecular Orientation (LCMO). Backgrounds and manufacturing of such orientation layers are disclosed in, for example, US 5,389,698,

US 5,838,407, US 5,602,661, US 6,160,597, US 6,144,428, all of the applicant. Using LPP layers, segments (pixels) of locally varying orientation may be formed. Thus, not only uniformly aligned dichroic LCP layers but also structured complex orientation patterns within the dichroic LCP layers may be produced. Furthermore multilayer systems formed from stacks of alternating LPP and LCP layers, wherein at least one of the LCP layers is a dichroic LCP layer are feasible. Such layers or stacks of layers may additionally be covered by other well-known functional layers, such as, e.g. protecting layers against oxygen or humidity or layers for protection against ultraviolet radiation.

It has been shown, e.g. in WO 99/64924, that photo-orienting materials like LPPs may also be able to orient liquid crystals, such as LCPs, if they are admixed to the mixture to be oriented prior to illumination with polarized light. In this way, orientation layers and LCP layers need not be formed separately. Thus, an analogous preparation of a dichroic LCP film using an inventive mixture, which in addition contains a photo-orientable material, may also be possible.

In addition, the present invention relates to the use of said composition of the present invention and a dichroic polymer network, a dichroic liquid crystalline polymer film (LCP film) or a dichroic liquid crystalline polymer gel of the present invention for the preparation of electro-optical and optical devices, preferably including security devices or multi-layer systems, such as functional foils.

A further aspect of the invention provides an electro-optical or optical device, preferably a security device or an optical film, or a multi-layer system, such as a functional foil, comprising a dichroic polymer network, a dichroic liquid crystalline polymer film (LCP film) or a dichroic liquid crystalline polymer gel of the present invention. Electro-optical or optical devices may include structured or unstructured optical filters, polarizers, especially linear or circular polarizers, etc.. Examples of electro-optical or optical devices are polarizers, optical films, security or authentication devices may for instance be used to safeguard banknotes, credit cards, securities, identity cards and the like against forgery and copying.

The following examples further describe the synthesis of dichroic dyes of formula (I) of the present invention. Variations on these falling within the scope of the invention will be apparent to a person skilled in the art.

Examples

Abbreviations

DMSO = Dimethylsulfoxide

$CDCl_3$, = deuterated chloroform

BOPP = biaxially oriented polypropylen

Example 1:

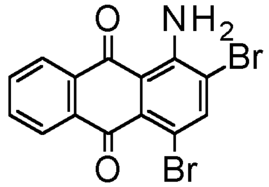

(1)

1-aminoanthraquinone (46.0 parts) commercial available such as from Sigma Aldrich, is dissolved in concentrated sulfuric acid (98%, 200 mL) at 60°C. When the product is completely dissolved, the temperature is decreased to room temperature before slow addition of ice (800.0 parts) with efficient stirring. To the resulting slurry at 0-5°C is then added drop wise bromine (72.4 parts) over a period of 3 hours. The resulting mixture is stirred at room temperature for 20 hours. Excess bromine is then removed by bubbling nitrogen in the reaction mixture. The precipitate is then filtered and washed with water (1000 mL). The wet press-cake is stirred in 8wt% aqueous sodium hydroxide solution (1000 mL) for one hour, filtered, successively washed with water (1000 mL), 20wt% aqueous sodium bisulfite solution (400 mL), water (1000 mL) and finally dried overnight at 50°C under vacuum to afford 70.0 parts of compound (1) as a red solid. NMR-$^1$H (DMSO-$d^6$, 300 MHz, ppm): 8.2 (s, 1H), 8.2-8.1 (m, 2H), 7.8 (m, 2H).

Example 2:

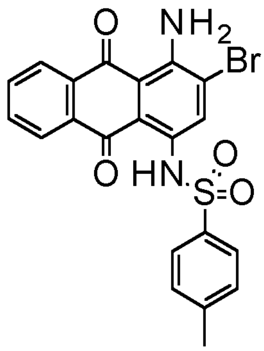

(2)

Compound (1) (68.6 parts), tosylamine (62.9 parts), potassium acetate (22.3 parts) and anhydrous copper acetate (1.7 parts) in amyl alcohol (750 mL) are stirred and refluxed for 10 hours. Temperature is decreased to room temperature and methanol (375 mL) is added. The precipitate is filtered, successively washed with methanol (500 mL) and water (1000 mL). The obtained press-cake is dried overnight at 50°C under vacuum to afford 84.8 parts of compound (2) as a dark brown solid. NMR-$^1$H (DMSO- $d^6$, 300MHz, ppm): 11.9 (s, 1H), 8.2-8.1 (m, 3H), 7.9 (m, 2H), 7.7 (d, 2H), 7.3 (d, 2H), 2.3 (s, 3H).

Example 3:

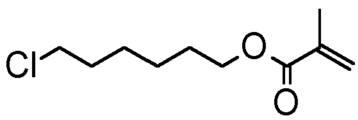

(3)

6-chlorohexan-1-ol (20.0 parts) (commercial available such as from Sigma Aldrich), dicyclohexylcarbodiimide (36.2 parts) and methacrylic acid (15.2 parts) are dissolved in tetrahydrofurane (200 mL). 4-Dimethylaminopyridine (2.0 parts) is added and the mixture is stirred 24 hours at room temperature. The reaction mixture is then filtered over celite and the filtrate is evaporated to dryness. The residue is then purified by column chromatography ($SiO_2$; eluent: toluene) to afford 30.0 parts of compound (3) as a colorless oil. NMR-$^1$H ($CDCl_3$, 300MHz, ppm): 6.1 (s, 1H), 5.5 (s, 1H), 4.1 (t, 2H), 3.5 (t, 2H), 1.9 (s, 3H), 1.8-1.6 (m, 4H), 1.5-1.3 (m, 4H).

Example 4:

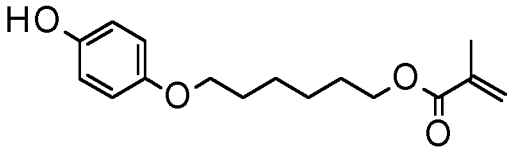

(4)

Compound (3) (30.0 parts), Hydroquinone (60.0 parts), potassium iodide (3.0 parts) and potassium carbonate (30.0 parts) are stirred in dimethylformamide (100 mL) and heated to 100°C for 10 hours. Temperature is decreased to room temperature, ethyl acetate (250 ml) is added and the mixture is successively washed with 1wt% aqueous hydrochloric acid solution (3x250 ml) and saturated aqueous sodium chloride solution (2x200 ml). The organic layer is dried over sodium sulfate, filtered and evaporated. The product is further purified by column chromatography ($SiO_2$; eluent: toluene then toluene/ethyl acetate: 95/5) to afford 31.4 parts of compound (4) as a colorless oil which solidify upon standing. NMR-$^1$H (DMSO- $d^6$, 300 MHz, ppm): 8.8 (s, 1H), 6.7 (d, 2H), 6.6 (d, 2H), 6.0 (s, 1H), 5.6 (s, 1H), 4.1 (t, 2H), 3.8 (d, 2H), 1.9 (s, 3H), 1.7-1.5 (m, 4H), 1.5-1.3 (m, 4H).

Example 5:

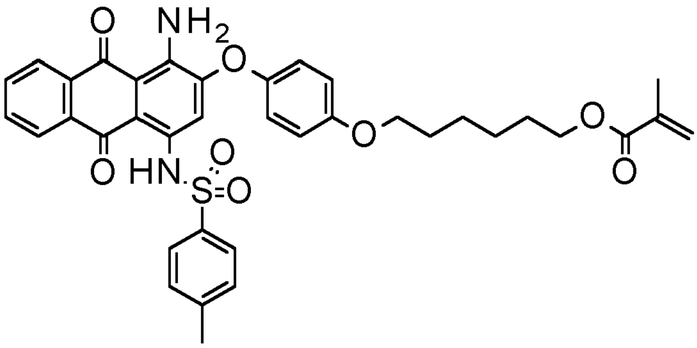

(5)

Compound (4) (5.0 parts) is dissolved in N-methyl-2-pyrrolidone (50 mL) at room temperature. Sodium hydride (60% dispersion in mineral oil, 0.54 part) is added and the resulting mixture is stirred 30 minutes at room temperature. Compound (2) (4.2 parts) and 2,6-di-tert-butyl-4-methylphenol (0.01 part) are then added and the resulting mixture is heated at 135°C for 8 hours under nitrogen. Temperature is decreased to room temperature, ethyl acetate (250 mL) is added and the mixture is successively washed with 1wt% aqueous hydrochloric acid solution (2x250 mL) and saturated aqueous sodium chloride solution (2x200 mL). The organic layer is dried over sodium sulfate, filtered and evaporated. The product is further purified by column chromatography ($SiO_2$; eluent: toluene/ethyl acetate: 95/5) to afford 3.7 parts of compound (5) as a dark reddish-pink solid. NMR-$^1$H (DMSO- $d^6$, 300 MHz, ppm): 12.9 (s, 1H), 8.2 (d, 2H), 7.9 (m, 2H), 7.4 (d, 2H), 7.3 (d, 2H), 7.2 (m, 4H), 6.9 (s, 1H), 6.0 (s, 1H), 5.6 (s, 1H), 4.1 (m, 4H), 2.3 (s, 3H), 1.9 (s, 3H), 1.8 (m, 2H), 1.7 (m, 2H), 1.5-1.3 (m, 4H).

Example 6:

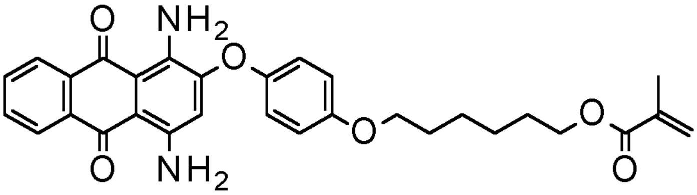

(6)

Compound (5) (3.6 parts) is mixed with methanesulfonic acid (30 mL) and stirred 24 hours at room temperature. The resulting solution is poured in a mixture of ice and water (300.0 parts) and the pH is slowly increased to 5-6 using an 8wt% aqueous sodium hydroxide solution. Ethyl acetate (300mL) is added, the organic phase is separated and successively washed with 5wt% aqueous sodium carbonate (2x200 mL) and saturated aqueous sodium chloride solution (2x200 mL). The organic phase is dried over sodium sulfate, filtered and evaporated. The product is further purified by column chromatography ($SiO_2$; eluent: toluene/ethyl acetate: 95/5) to afford 1.5 parts of compound (6) as a reddish-pink solid. NMR-$^1$H (DMSOd$^6$, 300 MHz, ppm): 8.2 (m, 2H), 7.8 (m, 2H), 7.2 (d, 2H), 7.1 (d, 2H), 6.4 (s, 1H), 6.0 (s, 1H), 5.6 (s, 1H), 4.1 (m, 2H), 4.0 (m, 2H), 1.9 (s, 3H), 1.7 (m, 2H), 1.6 (m, 2H), 1.5-1.3 (m, 4H).

Example 7:

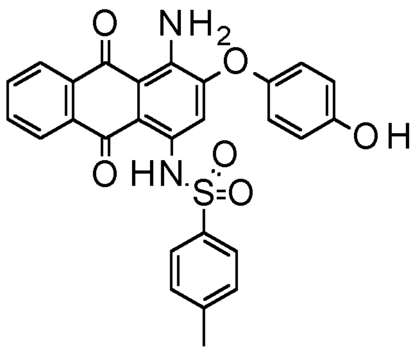

(7)

Compound (2) (9.5 parts) and hydroquinone (11.1 parts) are added to N-methyl-2-pyrrolidone (80 mL) and stirred at room temperature. Potassium carbonate (3.1 parts) is added and the reaction mixture is heated to 130°C for 20 hours. Temperature is decreased to room temperature and the resulting mixture is poured in 5wt% aqueous hydrochloric acid solution (650 mL) with efficient stirring. The precipitate is filtered, successively washed with 1wt% aqueous hydrochloric acid solution (300 mL), water (1000 mL) and finally dried overnight at 50°C under vacuum to afford 9.0 parts of compound (7) as a reddish-pink solid. NMR-$^1$H (DMSO- d$^6$, 300 MHz, ppm): 12.9 (s, 1H), 9.8 (s, 1H), 8.2 (m, 2H), 7.9 (m, 2H), 7.4 (d, 2H), 7.3 (d, 2H), 7.0 (m, 4H), 6.9 (s, 1H), 2.3 (s, 3H).

Example 8:

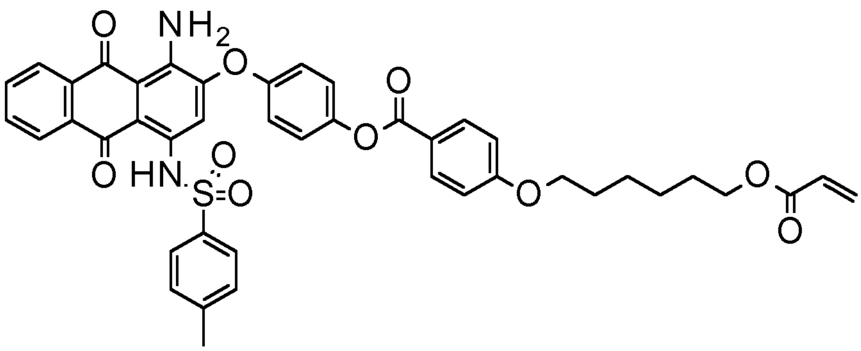

(8)

Compound (7) (4.5 parts), 4-(6-acryloyloxy-hexyl-1-oxy)benzoic acid (4.0 parts; synthesized according to US-6258974 or EP-1174411), dicyclohexylcarbodiimide (2.8 parts) and 2,6-di-tert-butyl-4-methylphenol (0.01 part) are dissolved in tetrahydrofurane (75 mL). 4-Dimethylaminopyridine (0.4 part) is added and the mixture is stirred 24 hours at room temperature. The reaction mixture is then filtered over celite and the n-heptane (200 mL) is added to the filtrate. Tetrahydrofurane is evaporated under vacuum and the resulting precipitate is filtered and successively washed with n-heptane (200 mL). The resulting product is finally dried overnight at 50°C under vacuum to afford 5.3 parts of compound (8) as a dark reddish-pink solid. NMR-$^1$H (DMSO- d$^6$, 300 MHz, ppm): 12.8 (s, 1H), 8.3 (d, 2H), 8.2 (m, 2H), 7.9 (m, 2H),

7.5 (d, 2H), 7.4 (d, 2H), 7.3 (d, 2H), 7.2 (d, 2H), 7.1 (d, 2H), 6.9 (s, 1H), 6.4-5.9 (m, 3H), 4.1 (m, 4H), 2.3 (s, 3H), 1.8 (m, 2H), 1.6 (m, 2H), 1.4 (m, 4H).

Example 9:

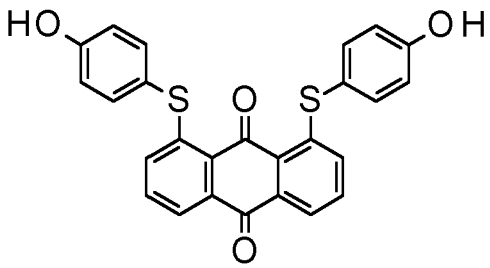

(9)

1,8-dichloroanthraquinone (5.0 parts) (commercial available such as from Sigma Aldrich) and 4-hydroxybenzenethiol (9.1 parts) are added to N-methyl-2-pyrrolidone (100 mL) and stirred at room temperature. Potassium carbonate (3.0 parts) is added and the reaction mixture is heated to 100°C for 4 hours. Temperature is decreased to room temperature and ethyl acetate (400 mL) is added. The organic phase is successively washed with 1wt% aqueous hydrochloric acid solution (2x200 mL) and saturated aqueous sodium chloride solution (2x200 mL). The organic phase is dried over sodium sulfate, filtered, evaporated and the obtained solid is finally dried overnight at 50°C under vacuum to afford 6.8 parts of compound (9) as a yellow-orange solid. NMR-$^1$H (DMSO- $d^6$, 300 MHz, ppm): 10.0 (s, 2H), 7.9 (d, 2H), 7.6 (t, 2H), 7.4 (d, 4H), 7.1 (d, 2H), 6.9 (d, 4H).

Example 10:

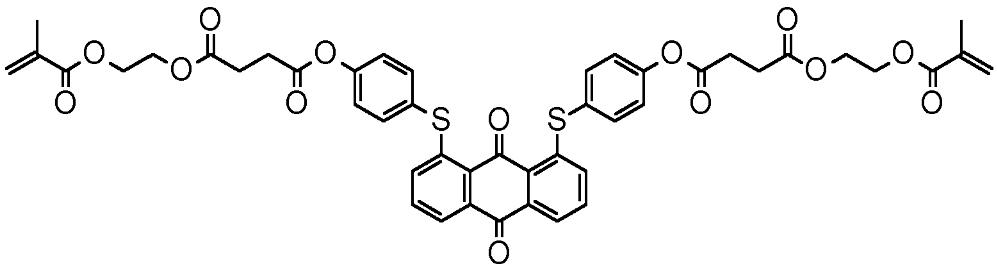

(10)

Compound (9) (2.6 parts), mono-2-(methacryloyl)ethyl succinate (3.3 parts), dicyclohexylcarbodiimide (3.0 parts) and 2,6-di-tert-butyl-4-methylphenol (0.01 part) are dissolved in dichloromethane (100 mL). 4-Dimethylaminopyridine (0.4 part) is added and the mixture is stirred 5 hours at room temperature. The reaction mixture is then filtered over celite and the filtrate poured in n-heptane (400mL) with efficient stirring. The resulting precipitate is filtered, successively washed with a mixture composed of ethyl acetate/n-heptane (1/2; 300 mL), methanol (300 mL) and finally dried overnight at 50°C under vacuum to afford 4.0 parts of compound (10) as an orange solid. NMR-$^1$H ($CDCl_3$, 300 MHz, ppm): 8.1 (d, 2H), 7.7 (d, 4H), 7.4 (t, 2H), 7.3 (d, 4H), 7.2 (d, 2H), 6.1 (s, 2H), 5.6 (s, 2H), 5.4 (m, 8H), 2.9 (m, 4H), 2.8 (m, 4H), 1.9 (s, 6H).

Example 11:

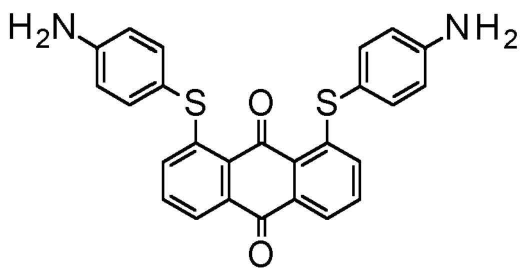

(11)

1,8-dichloroanthraquinone (10.0 parts) and 4-aminobenzenethiol (11.4 parts) are added to N-methyl-2-pyrrolidone (100 mL) and stirred at room temperature. Potassium carbonate (12.5 parts) is added and the reaction mixture is heated to 100°C for 4 hours. Temperature is decreased to room temperature and methanol (250 mL) is added dropwise with efficient stirring. The resulting precipitate is filtered, successively washed with methanol (250 mL), water (500 mL) and finally dried overnight at 50°C under vacuum to afford 15.1 parts of compound (11) as a yellow-orange solid. NMR-$^1$H (DMSO- d$^6$, 300 MHz, ppm): 7.9 (d, 2H), 7.6 (m, 2H), 7.2 (d, 4H), 7.1 (d, 2H), 6.7 (d, 4H), 5.6 (s, 4H).

Example 12:

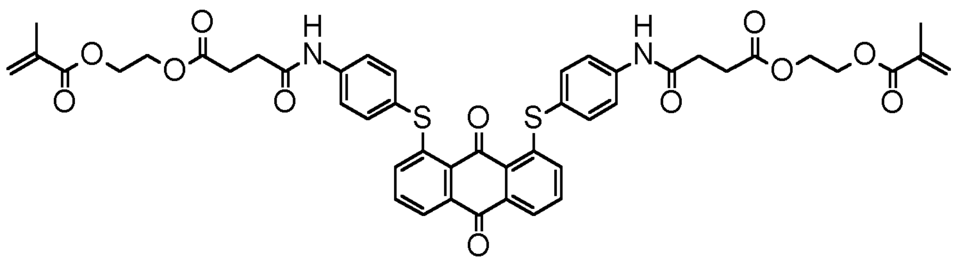

(12)

Compound (11) (3.0 parts), mono-2-(methacryloyl)ethyl succinate (4.6 parts), dicyclohexylcarbodiimide (4.0 parts) and 2,6-di-tert-butyl-4-methylphenol (0.01 part) are dissolved in dichloromethane (150 mL). 4-Dimethylaminopyridine (0.5 part) is added and the mixture is stirred 24 hours at room temperature. The reaction mixture is then filtered over celite and the filtrate is concentrated under vacuum. The product is purified by column chromatography ($SiO_2$; eluent: toluene/ethyl acetate: 50/50) to afford after drying overnight at 50°C under vacuum 4.2 parts of compound (12) as an orange. NMR-$^1$H ($CDCl_3$, ppm): 8.1 (d, 2H), 7.9 (s, 2H), 7.7 (d, 4H), 7.6 (d, 4H), 7.4 (t, 2H), 7.1 (d, 2H), 6.2 (s, 2H), 5.6 (s, 2H), 4.4 (m, 8H), 2.8 (m, 4H), 2.6 (m, 2H), 1.9 (s, 6H).

Example 13:

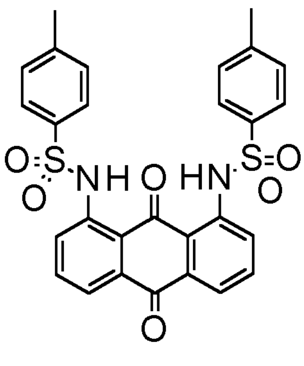

(13)

1,8-Dichloroanthraquinone (104.0 parts), tosylamine (250.0 parts), potassium acetate (146.0 parts) and anhydrous copper acetate (5.0 parts) in amyl alcohol (1000 mL) are stirred and refluxed for 20 hours. Temperature is decreased

to room temperature and methanol (1000 mL) is added. The precipitate is filtered, successively washed with methanol (1000 mL) and water (1000 mL). The obtained press-cake is dried overnight at 50°C under vacuum to afford 185.0 parts of compound (13) as an orange solid. NMR-$^1$H (DMSO- $d^6$, 300 MHz, ppm): 11.7 (s, 2H), 7.9 (d, 4H), 7.8 (m, 6H), 7.4 (d, 4H), 2.3 (s, 6H).

Example 14:

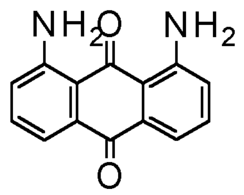

(14)

Compound (13) (180.0 parts) is added portion-wise with efficient stirring to concentrated sulfuric acid (98%, 500 mL) at room temperature. The resulting mixture is heated to 60°C for 2 hours. Temperature is decreased to room temperature and the obtained solution is slowly poured in a mixture of ice (1500 parts) and water (1000 mL). After 30 minutes of stirring, the resulting solid is filtered and washed with water (2000 mL). The filter cake is then slurried in 5wt% aqueous Sodium hydroxide solution (500 mL) and stirred at room temperature for 1 hour. The precipitate is filtered, washed with water (1000 mL) and finally dried overnight at 50°C under vacuum to afford 78.0 parts of compound (14) as a red solid. NMR-$^1$H (DMSO-$d^6$, 300 MHz, ppm): 7.8 (broad, 4H), 7.6 (m, 2H), 7.3 (m, 2H), 7.1 (m, 2H).

Example 15:

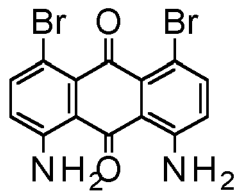

(15)

Compound (14) (10.0 parts) is dissolved in N-methyl-2-pyrrolidone (80 mL) and stirred at room temperature. N-Bromosuccinimide (14.9 parts) dissolved in N-methyl-2-pyrrolidone (50 mL) is then added dropwise over a period of 30 minutes and the resulting mixture is stirred 2 hours at room temperature. Methanol (400 mL) is then added dropwise. The precipitate is filtered, successively washed with methanol (200 mL), water (200 mL) and finally dried overnight at 50°C under vacuum to afford 15.8 parts of compound (15) as a brown solid. NMR-$^1$H (DMSO- $d^6$, 300 MHz, ppm): 7.9 (broad, 4H), 7.6 (d, 2H), 6.9 (d, 2H).

Example 16:

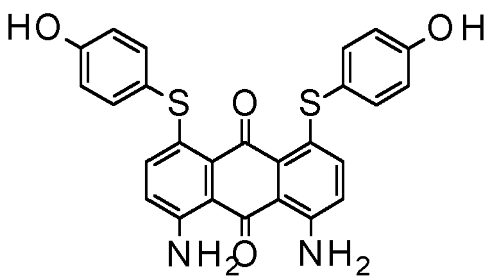

(16)

Compound (15) (2.7 parts) and 4-hydroxybenzenethiol (2.6 parts) are added to N-methyl-2-pyrrolidone (25 mL) and stirred at room temperature. Potassium carbonate (2.8 parts) is added and the reaction mixture is heated to 80°C for 1 hour. Temperature is decreased to room temperature and a mixture composed of water (200 mL) and acetic acid (20 mL) is added dropwise with stirring. The precipitate is filtered, washed with water (1000 mL) and finally dried overnight at 50°C under vacuum to afford 2.7 parts of compound (16) as a dark blue-violet solid. NMR-$^1$H (DMSO- $d^6$, 300 MHz, ppm): 9.9 (s, 2H), 7.9 (broad, 4H), 7.4 (d, 4H), 7.0 (d, 2H), 6.9 (d, 4H), 6.7 (d, 2H).

Example 17:

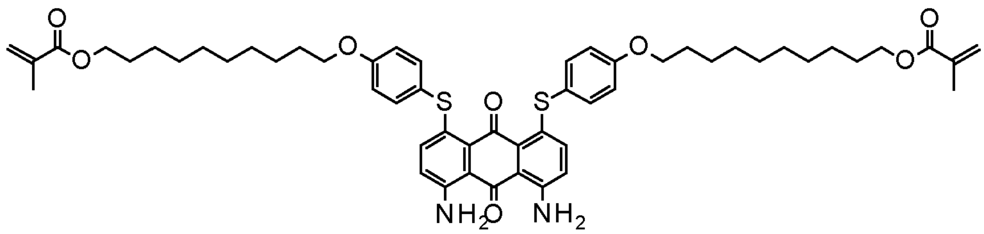

(17)

Compound (16) (2.5 parts), 10-bromodecyl-1-methacrylate (3.8 parts; synthesized from 10-bromodecan-1-ol in a similar way as compound (3)), potassium carbonate (1.7 parts) and 2,6-di-tert-butyl-4-methylphenol (0.01 part) are mixed in N-methyl-2-pyrrolidone (30 mL) and heated to 90°C for 3 hours. Temperature is decreased to room temperature and ethyl acetate (300 mL) is added. The organic phase is successively washed with water (2x150 mL) and saturated aqueous sodium chloride solution (2x150 mL). The organic layer is dried over sodium sulfate, filtered and evaporated. The product is further purified by column chromatography ($SiO_2$; eluent: toluene/ethyl acetate: 95/5) to afford 1.5 parts of compound (17) as a dark blue-violet solid. NMR-$^1$H (DMSO- $d^6$, 300 MHz, ppm): 8.0 (broad, 4H), 7.5 (d, 4H), 7.1 (d, 4H), 7.0 (d, 2H), 6.7 (d, 2H), 6.0 (s, 2H), 5.6 (s, 2H), 4.1 (m, 4H), 4.0 (m, 4H), 1.9 (s, 6H), 1.7 (m, 4H), 1.6 (m, 4H), 1.4-1.2 (m, 24H).

Example 18:

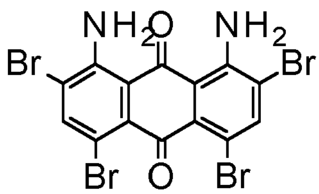

(18)

Compound (14) (58.0 parts) is dissolved in concentrated sulfuric acid (98%, 170 mL) at 60°C. When the product is completely dissolved, the temperature is decreased to room temperature before slow addition of ice (850.0 parts) with efficient stirring. To the resulting slurry at 0-5°C is then added dropwise bromine (182.0 parts) over a period of 3 hours. The resulting mixture is stirred at room temperature for 20 hours. Excess bromine is then removed by bubbling nitrogen in the reaction mixture. The precipitate is then filtered, successively washed with water (1000 mL), 8wt% aqueous sodium hydroxide solution (1000 mL), 20wt% aqueous sodium bisulfite solution (400 mL), water (3000 mL) and finally dried overnight at 50°C under vacuum to afford 119.0 parts of compound (18) as a reddish-brown solid. NMR-$^1$H (DMSO- $d^6$, 300 MHz, ppm): 8.1 (s, 2H), 7.9 (broad, 4H).

Example 19:

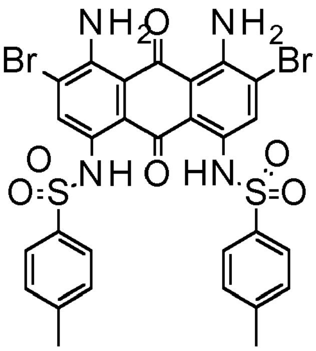

(19)

Compound (18) (119.0 parts), tosylamine (150.0 parts), potassium acetate (53.0 parts) and anhydrous copper acetate (4.0 parts) in amyl alcohol (1700 mL) are stirred and refluxed for 10 hours. Temperature is decreased to room temperature and methanol (850 mL) is added. The precipitate is filtered, successively washed with methanol (1000 mL) and water (2000 mL). The obtained press-cake is dried overnight at 50°C under vacuum to afford 150.0 parts of compound (19) as a dark blue solid. NMR-$^1$H (DMSO- d$^6$, 300 MHz, ppm): 11.0 (s, 2H), 8.0 (s, 2H), 7.9 (broad, 4H), 7.7 (d, 4H), 7.3 (d, 4H), 2.3 (s, 6H).

Example 20:

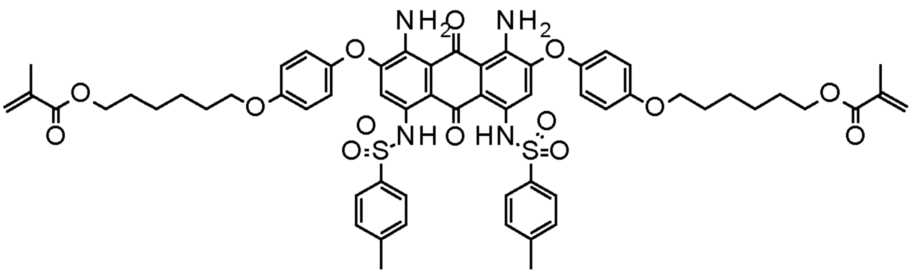

(20)

Compound (4) (4.0 parts) is dissolved in N-methyl-2-pyrrolidone (25 mL) at room temperature. Sodium hydride (60% dispersion in mineral oil, 0.5 part) is added and the resulting mixture is stirred 30 minutes at room temperature. Compound (19) (3.0 parts) and 2,6-di-tert-butyl-4-methylphenol (0.01 part) are then added and the resulting mixture is heated at 135°C for 24 hours under nitrogen. Temperature is decreased to room temperature, ethyl acetate (200 mL) is added and the mixture is successively washed with 1wt% aqueous hydrochloric acid solution (3x200 mL) and saturated aqueous sodium chloride solution (3x200 mL). The organic layer is dried over sodium sulfate, filtered and evaporated. The product is further purified by column chromatography ($SiO_2$; eluent: toluene/ethyl acetate: 98/2) to afford 2.0 parts of compound (20) as a dark blue-violet solid. NMR-$^1$H (DMSO- d$^6$, 300 MHz, ppm): 12.3 (s, 2H), 7.4 (d, 4H), 7.3 (d, 4H), 7.2 (d, 4H), 7.1 (d, 4H), 6.8 (s, 2H), 6.0 (s, 2H), 5.6 (s, 2H), 4.1 (m, 8H), 2.3 (s, 6H), 1.9 (s, 6H), 1.8 (m, 4H), 1.6 (m, 4H), 1.4 (m, 8H).

Example 21:

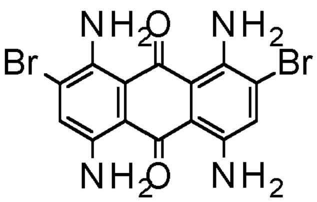

(21)

Compound (19) (10.0 parts) is added portion-wise with efficient stirring to concentrated sulfuric acid (98%, 60

mL) at room temperature. The resulting mixture is heated to 60°C for 2 hours. Temperature is decreased to room temperature and the obtained solution is slowly poured in a mixture of ice (300 parts) and water (300 mL). After 30 minutes stirring, the resulting solid is filtered and washed with water (500 mL). The filter cake is then slurried in 5wt% aqueous sodium hydroxyde solution (300 mL) and stirred at room temperature for 1 hour. The precipitate is filtered, washed with water (500 mL) and finally dried overnight at 50°C under vacuum to afford 5.8 parts of compound (21) as a blue-violet solid. NMR-$^1$H (DMSO- $d^6$, 300 MHz, ppm): 7.7 (broad, 8H), 7.5 (s, 2H).

Example 22:

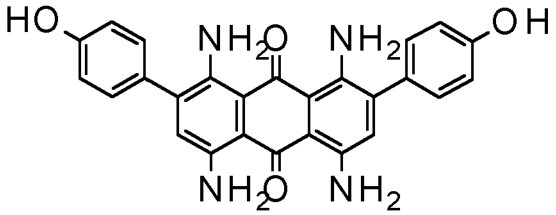

(22)

Compound (21) (5.0 parts), 4-hydroxyphenyl boronic acid (4.9 parts), potassium carbonate (5.0 parts) and tretakis-triphenylphosphine palladium (1.3 parts) are mixed in N-methyl-2-pyrrolidone (90 mL) and deionized water (10 mL) and heated to 100°C for 3 hours under nitrogen. Temperature is decreased to room temperature and the reaction mixture is poured in deionized water (800 mL). The precipitate is filtered, washed with water (3x50 mL) and dried at 50°C under vacuum. The resulting solid is dissolved in tetrahydrofurane (1000mL) with heating and filtered over celite while still hot. To the filtrate is added toluene (500 mL) and tetrahydrofurane is evaporated under vacuum. The precipitate is filtered, washed with toluene (300 mL) and dried overnight at 50°C under vacuum to afford 4.6 parts of compound (22) as a dark blue solid. NMR-$^1$H (DMSO- $d^6$, 300 MHz, ppm): 9.7 (s, 2H), 7.7 (s, 4H), 7.4 (broad, 4H), 7.3 (d, 4H), 6.9 (s, 2H), 6.8 (d, 4H).

Example 23:

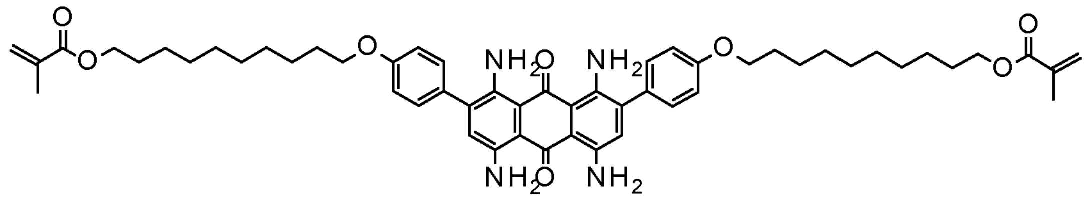

(23)

Compound (22) (1.0 part), 10-bromodecyl-1-methacrylate (2.0 parts; synthesized from 10-bromodecan-1-ol according to example 3), potassium carbonate (0.76 part) and 2,6-di-tert-butyl-4-methylphenol (0.01 part) are mixed in N-methyl-2-pyrrolidone (25 mL) and heated to 80°C for 3 hours. Temperature is decreased to room temperature and ethyl acetate (300 mL) is added. The organic phase is successively washed with 1wt% aqueous hydrochloric acid solution (3x150 mL) and saturated aqueous sodium chloride solution (3x150 mL). The organic layer is dried over sodium sulfate, filtered and evaporated. The product is further purified by column chromatography ($SiO_2$; eluent: toluene/ethyl acetate: 95/5) to afford 1.4 parts of compound (23) as a dark blue-violet solid. NMR-$^1$H (DMSO- $d^6$, 300 MHz, ppm): 7.7 (broad, 4H), 7.4 (d, 4H), 7.3 (broad, 4H), 7.1 (d, 4H), 6.9 (s, 2H), 6.0 (s, 2H), 4.1 (m, 4H), 4.0 (m, 4H), 1.9 (s, 6H), 1.8 (m, 4H), 1.6 (m, 4H), 1.4-1.2 (m, 24H).

Example 24:

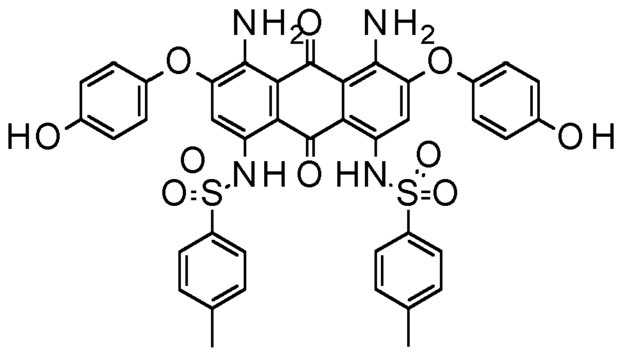

(24)

Compound (19) (11.0 parts) and hydroquinone (16.0 parts) are added to N-methyl-2-pyrrolidone (80 mL) and stirred at room temperature. Potassium carbonate (4.5 parts) are added and the reaction mixture is heated to 120-130°C for 5 hours. Temperature is decreased to room temperature and the resulting mixture is poured in 5wt% aqueous hydrochloric acid (400 mL) with efficient stirring. The precipitate is filtered, successively washed with 1wt% aqueous hydrochloric acid solution (200 mL), water (1000 mL) and finally dried overnight at 50°C under vacuum to afford 11.0 parts of compound (24) as a dark blue-violet solid. NMR-$^1$H (DMSO- $d^6$, 300 MHz, ppm): 12.4 (s, 2H), 9.7 (s, 2H), 7.4 (d, 4H), 7.3 (d, 4H), 7.0 (m, 8H), 6.9 (s, 2H), 2.3 (s, 6H).

Example 25:

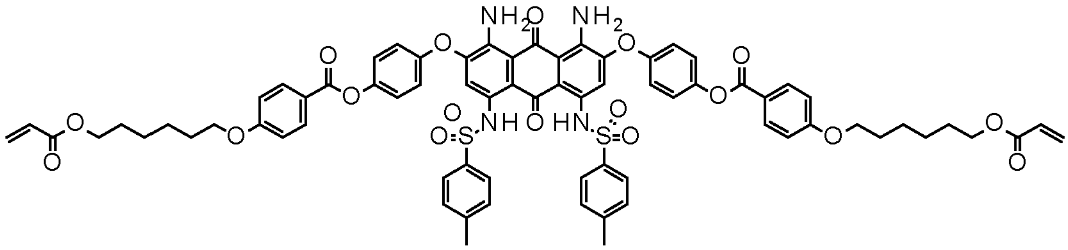

(25)

Compound (24) (7.0 parts), 4-(6-acryloyloxy-hexyl-1-oxy)benzoic acid (7.7 parts; synthesized according to US-6258974 or EP-1174411), dicyclohexylcarbodiimide (5.3 parts) and 2,6-di-tert-butyl-4-methylphenol (0.01 part) are dissolved in dichloromethane (200 mL). 4-Dimethylaminopyridine (0.5 part) is added and the mixture is stirred 5 hours at room temperature. The reaction mixture is then filtered over celite and the filtrate poured in methanol (400mL) with efficient stirring. The resulting precipitate is filtered, washed with methanol (300 mL) and purified by column chromatography ($SiO_2$; eluent: toluene/ethyl acetate: 90/10). The resulting product is finally dried overnight at 50°C under vacuum to afford 9.0 parts of compound (25) as a dark blue-violet solid. NMR-$^1$H (DMSO- $d^6$, 300 MHz, ppm): 12.3 (s, 2H), 8.1 (d, 4H), 7.5 (m, 8H), 7.4 (d, 4H), 7.2 (d, 4H), 7.1 (d, 4H), 6.9 (s, 2H), 6.4-5.9 (m, 6H), 4.1 (m, 8H), 2.3 (s, 6H), 1.8 (m, 4H), 1.6 (m, 4H), 1.4 (m, 8H).

Example 26:

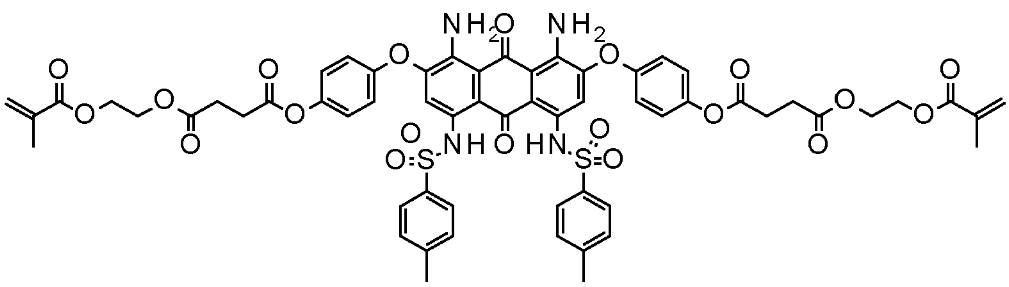

(26)

Compound (24) (2.0 parts), mono-2-(methacryloyl)ethyl succinate (1.5 parts), dicyclohexylcarbodiimide (1.3 parts) and 2,6-di-tert-butyl-4-methylphenol (0.01 part) are dissolved in dichloromethane (75 mL). 4-Dimethylaminopyridine (0.4 part) is added and the mixture is stirred 20 hours at room temperature. The reaction mixture is then filtered over celite and the filtrate poured in n-heptane (250mL) with efficient stirring. The resulting precipitate is filtered, successively washed with n-heptane (250 mL), methanol (250 mL) and finally dried overnight at 50°C under vacuum to afford 2.7 parts of compound (26) as a dark blue-violet solid. NMR-$^1$H ($CDCl_3$, 300 MHz, ppm): 12.3 (s, 2H), 7.5 (d, 4H), 7.3-7.0 (m, 14H), 6.1 (s, 2H), 5.6 (s, 2H), 4.4 (m, 8H), 2.9 (m, 4H), 2.8 (m, 4H), 2.4 (s, 6H), 1.9 (s, 6H).

Example 27:

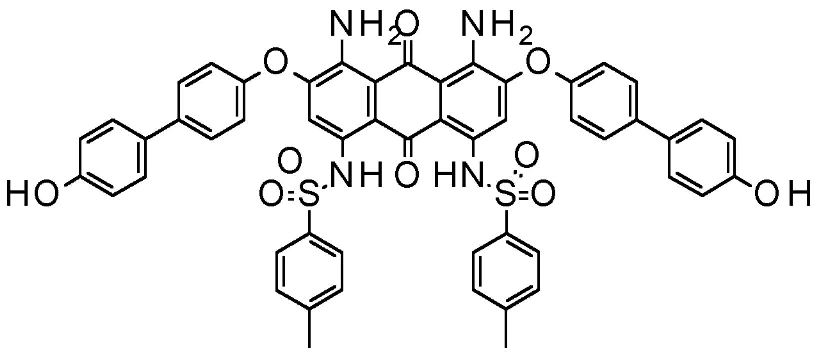

(27)

Compound (19) (2.0 parts) and 4,4'-dihydroxybiphenyl (5.0 parts) are added to N-methyl-2-pyrrolidone (25 mL) and stirred at room temperature. Potassium carbonate (0.8 part) is added and the reaction mixture is heated to 140°C for 5 hours. Temperature is decreased to room temperature and the resulting mixture is poured in 5wt% aqueous hydrochloric acid solution (300 mL) with efficient stirring. The precipitate is filtered and washed with water (300 mL). The solid is then stirred in hot methanol (300 mL), filtered, washed with methanol (200 mL) and finally dried overnight at 50°C under vacuum to afford 2.3 parts of compound (27) as a dark blue-violet solid. NMR-$^1$H (DMSO- d$^6$, 300 MHz, ppm): 12.3 (s, 2H), 9.6 (s, 2H), 7.8 (d, 4H), 7.7 (d, 4H), 7.5 (d, 4H), 7.3 (d, 4H), 7.2 (d, 4H), 7.0 (d, 4H), 6.9 (s, 2H), 2.3 (s, 6H).

Example 28:

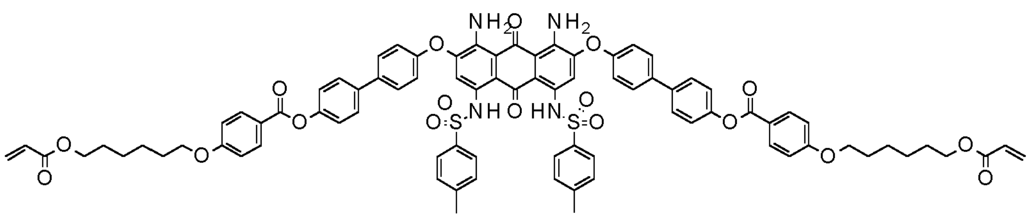

(28)

Compound (27) (2.0 parts), 4-(6-acryloyloxy-hexyl-1-oxy)benzoic acid (2.0 parts; synthesized according to US-6258974 or EP-1174411), dicyclohexylcarbodiimide (1.4 parts) and 2,6-di-tert-butyl-4-methylphenol (0.01 part) are dissolved in tetrahydrfurane (100 mL). 4-Dimethylaminopyridine (0.2 part) is added and the mixture is stirred 24 hours at room temperature. The reaction mixture is then filtered over celite and the filtrate is evaporated. The resulting solid is further purified by column chromatography ($SiO_2$; eluent: toluene/ethyl acetate: 95/5) and finally dried overnight at 50°C under vacuum to afford 2.1 parts of compound (28) as a dark blue-violet solid. NMR-$^1$H (DMSO- d$^6$, 300 MHz, ppm): 12.2 (s, 2H), 8.1 (d, 4H), 7.9 (m, 8H), 7.4 (m, 8H), 7.3 (m, 8H), 7.1 (d, 4H), 6.9 (s, 2H), 6.4-5.9 (m, 6H), 4.1 (m, 8H), 2.3 (s, 6H), 1.8 (m, 4H), 1.6 (m, 4H), 1.4-1.2 (m, 8H).

Preparation of dichroic mixtures $M_{LCP}$:

Dichroic mixtures $M_{LCP}$ were prepared as illustrated in table 1:

| Table 1 | | | | | |
|---|---|---|---|---|---|
| | Mixture composition | | | | |
| Mixture | Dichroic Dye | LCP component a) | Photoinitiator b) | Total | Color |
| $M_{LCP1}$ | Compound (6) 10 wt% | 88 wt% | 2 wt% | 100 wt% | Pink-Red |
| $M_{LCP2}$ | Compound (8) 10 wt% | 88 wt% | 2 wt% | 100 wt% | Pink-Red |
| $M_{LCP3}$ | Compound (10) 10 wt% | 88 wt% | 2 wt% | 100 wt% | Yellow |
| $M_{LCP4}$ | Compound (12) 10 wt% | 88 wt% | 2 wt% | 100 wt% | Yellow |
| $M_{LCP5}$ | Compound (17) 10 wt% | 88 wt% | 2 wt% | 100 wt% | Blue |
| $M_{LCP6}$ | Compound (20) 10 wt% | 88 wt% | 2 wt% | 100 wt% | Blue |
| $M_{LCP7}$ | Compound (23) 10 wt% | 88 wt% | 2 wt% | 100 wt% | Blue |
| $M_{LCP8}$ | Compound (25) 10 wt% | 88 wt% | 2 wt% | 100 wt% | Blue |
| $M_{LCP9}$ | Compound (26) 10 wt% | 88 wt% | 2 wt% | 100 wt% | Blue |
| $M_{LCP10}$ | Compound (28) 10 wt% | 88 wt% | 2 wt% | 100 wt% | Blue |
| $M_{LCP11}$ | Compound (12) 5 wt%<br>Compound (25) 4 wt%<br>Compound (6) 1 wt% | 88 wt% | 2 wt% | 100 wt% | Grey |
| $M_{LCP12}$ | Compound (12) 6.7 wt%<br>Compound (25) 3.3 wt% | 88 wt% | 2 wt% | 100 wt% | Green |
| $M_{LCP13}$ | Compound (25) 5 wt%<br>Compound (6) 5 wt% | 88 wt% | 2 wt% | 100 wt% | Violet |
| $M_{LCP14}$ | Compound (10) 5 wt%<br>Compound (17) 3.3 wt%<br>Compound (8) 1.7 wt% | 88 wt% | 2 wt% | 100 wt% | Grey |
| $M_{LCP15}$ | Compound (17) 5 wt%<br>Compound (8) 5 wt% | 88 wt% | 2 wt% | 100 wt% | Violet |
| $M_{LCP16}$ | Compound (10) 6 wt%<br>Compound (17) 4 wt% | 88 wt% | 2 wt% | 100 wt% | Green |
| wt% = weight % | | | | | |

a) LCP component used in the above mixtures is described in WO 2011003846, on page 29 and have the following structure:

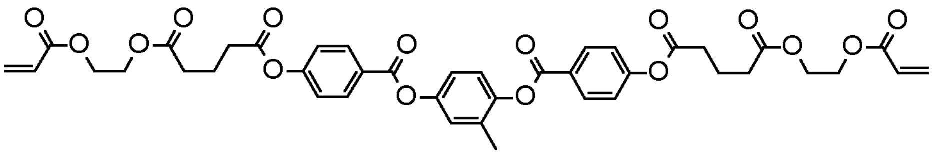

(LCP)

b) Photoinitiator is Irgacure® 369 from BASF.

The mixtures $M_{LCP1}$ to $M_{LCP16}$ are used to produce oriented, dichroic liquid crystal samples on plastic substrates as described below.

<u>Production of dichroic LCP layers:</u>

Sixteen samples $P_1$ to $P_{16}$ are prepared, whereby each single specimen comprised an alignment layer and a dichroic liquid crystal polymer layer. The alignment layers are manufactured using the linearly photo-polymerizable

aligning (LPP) technique. The dichroic liquid crystal polymer layers are oriented by the adjacent LPP layers. The manufacturing processes of both layers are described in the following.

For the production of an LPP orientation layer, suitable LPP materials are described for example in patent publications EP 0 611 786, WO 96/10049, EP 0 763 552 and US 6107427, and include cinnamic acid derivatives and ferulic acid derivatives. For the examples, the following LPP material is chosen, which is described in WO2012/08504, example 1:

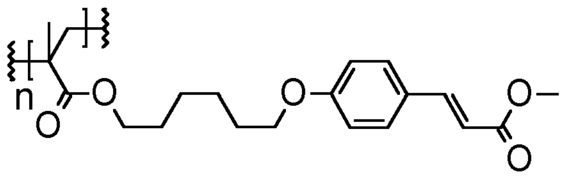

(LPP)

A 4 wt% solution of the above mentioned LPP material in a mixture of solvent composed of methylethylketone and cyclohexanone (80/20 w/w) is coated on a BOPP (50μm) substrate using a bar coater (KBar 0). The foil is then warmed for 30 seconds at 80°C in an oven. The resulting layer has a thickness of approximately 100 nanometers.

The coated film is then exposed to linearly polarized UV light from a mercury high pressure lamp using an energy dose of 300 mJ/cm$^2$ at room temperature.

The layer is then used as an orientation layer for a liquid crystal material comprising dichroic dyes.

For the production of the dichroic LCP layers, the mixtures $M_{LCP1}$ to $M_{LCP16}$ are dissolved in a mixture of solvent composed of methylethylketone and cyclohexanone (80/20 w/w) to give a 40 wt% solution. These LCP mixtures, which include dichroic dyes, are then coated on top of the photo-exposed LPP layers using a bar coater (KBar 2). The coated dichroic LCP layers are then dried at 60°C for approximately 30 seconds in an oven. For photo-initiated cross-linking of the liquid crystals and dye components, the layers are exposed to isotropic light from a xenon lamp using an energy dose of 1500 mJ/cm$^2$ at room temperature in an inert atmosphere. The resulting layer has a thickness of approximately 3 micrometers.

The procedure described above gives photo-aligned dichroic LCP layers on plastic substrates leading to sixteen different samples P1 to P16 derived from the sixteen dichroic LCP mixtures $M_{LCP1}$ to $M_{LCP16}$.

Order parameters of samples $P_1$ to $P_{16}$:
The order parameter S of a dichroic dye is given by the following expression:

$$S = D_{//} - D_{\perp} / D_{//} + 2\ D_{\perp}$$

wherein $D_{//}$ and $D\perp$ are the optical densities of a dichroic dye in a liquid crystal measured for light polarizations parallel and perpendicular to the liquid crystal director.

Table 2 shows the order parameters S of samples $P_1$ to $P_{16}$ measured at the indicated wavelength.

Table 2

| Samples | MLCP | λ (nm) | S |
|---|---|---|---|
| $P_1$ | $M_{LCP1}$ | 584 | 0.47 |
| $P_2$ | $M_{LCP2}$ | 522 | 0.47 |
| $P_3$ | $M_{LCP3}$ | 452 | 0.45 |
| $P_4$ | $M_{LCP4}$ | 458 | 0.52 |
| $P_5$ | $M_{LCP5}$ | 616 | 0.55 |
| $P_6$ | $M_{LCP6}$ | 608 | 0.45 |
| $P_7$ | $M_{LCP7}$ | 672 | 0.55 |
| $P_8$ | $M_{LCP8}$ | 608 | 0.61 |
| $P_9$ | $M_{LCP9}$ | 574 | 0.43 |
| $P_{10}$ | $M_{LCP10}$ | 606 | 0.59 |
| $P_{11}$ | $M_{LCP11}$ | 582 | 0.57 |

(continued)

| Table 2 | | | |
|---|---|---|---|
| Samples | MLCP | λ (nm) | S |
| $P_{12}$ | $M_{LCP12}$ | 608 | 0.56 |
| $P_{13}$ | $M_{LCP13}$ | 584 | 0.46 |
| $P_{14}$ | $M_{LCP14}$ | 614 | 0.46 |
| $P_{15}$ | $M_{LCP15}$ | 614 | 0.49 |
| $P_{16}$ | $M_{LCP16}$ | 614 | 0.48 |

All samples $P_1$ to $P_{16}$ are cross-linked successfully. The surfaces are completely dry and are more or less resistant against scratches.

**Claims**

1. A composition comprising a dichroic dye of formula (I) and at least one slave material which is a liquid crystal or polymerizable liquid crystal,

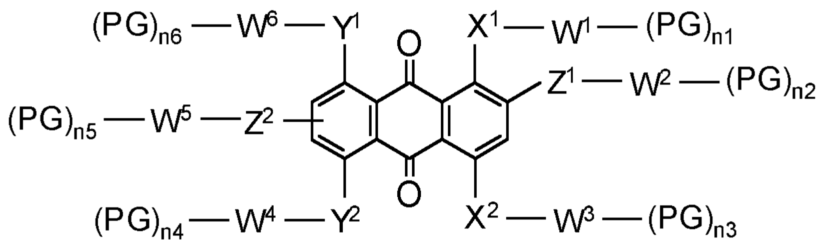

(I)

wherein

$X^2$, $X^1$ are independently from each other NR,
R represents hydrogen, unbranched or branched $C_1$-$C_8$alkyl,
$Y^1$, $Y^2$ independently from each other are a single bond,
$Z^1$ is O,
$Z^2$ is a single bond,
n2 is 1,
n1, n3, n4, n5, n6 are 0,
$W^1$, $W^4$, $W^5$, $W^6$ are hydrogen,
$W^2$, $W^3$ are independently from each other are unsubstituted or substituted, straight chain or branched $C_1$-$C_{30}$alkyl, in which one -CH- or -$CH_2$- group may be replaced by one or more linking group consisting of -O-, -S-, -$NR^1$-, -CH($OR^1$)-, -CO-$NR^1$-, -$NR^1$-CO-, -CO-O-, -O-CO-, -$SO_2$- or an aromatic group which is unsubstituted or substituted by one or more -F, -Cl or -$OR^1$; straight chain or branched, unsubstituted $C_1$-$C_8$ alkyl, or straight chain or branched $C_1$-$C_8$ alkyl, which is substituted by one or more cyano group, one or more hydroxyl group or one or more halogen atoms, and wherein
$R^1$ is hydrogen or straight chain or branched, unsubstituted $C_1$-$C_8$alkyl, or $C_1$-$C_6$alkyl, which is substituted by one or more cyano group, one or more hydroxyl group or one or more halogen atoms,
PG is a polymerizable group consisting of $CH_2$=CQ-COO-, wherein Q is hydrogen or methyl; or
a dichroic dye of formula (I), wherein
$X^1$ is S
$X^2$ is single bond or NR,
R represents hydrogen or straight chain or branched, unsubstituted $C_1$-$C_8$ alkyl, or
$C_1$-$C_6$alkyl, which is substituted by one or more cyano group, one or more hydroxyl group or one or more halogen atoms,
$Y^1$ is S,
$Y^2$ is a single bond or NR,

$Z^1$ , $Z^2$ are single bond,
n1, n6 are 1,
n2, n3, n4, n5, are 0,
$W^2$, $W^3$, $W^4$, $W^5$ are hydrogen
$W^1$ , $W^3$ are independently from each other are unsubstituted or substituted, straight chain or branched $C_1$-$C_{30}$ alkyl, in which one -CH- or -$CH_2$- group may be replaced by one or more linking group consisting of -O-, -S-, -$NR^1$-, -CH($OR^1$)-, -CO-$NR^1$-, -$NR^1$-CO-, -CO-O-, -O-CO-, -$SO_2$- or an aromatic group which is unsubstituted or substituted by one or more straight chain or branched $C_1$-$C_8$alkyl, -F, -Cl or -$OR^1$, and wherein
$R^1$ represents hydrogen, or straight chain or branched, unsubstituted $C_1$-$C_8$ alkyl, or $C_1$-$C_6$ alkyl, which is substituted by one or more cyano group, one or more hydroxyl group or one or more halogen atoms,
PG is a polymerizable group consisting of $CH_2$=CQ-COO-, wherein Q is hydrogen or methyl; or
a dichroic dye of formula (I), wherein
$X^1$, $X^2$ are independently from each other NR
$Y^1$, $Y^2$ are independently from each other NR,
R represents hydrogen, or straight chain or branched, unsubstituted $C_1$-$C_8$ alkyl, or $C_1$-$C_6$ alkyl, which is substituted by one or more cyano group, one or more hydroxyl group or one or more halogen atoms,
$Z^1$, $Z^2$ are independently from each other a single bond or O,
n2, n5 are 1,
n1, n3, n4, n6, are 0,
$W^1$, $W^6$ are hydrogen,
$W^2$, $W^3$ $W^4$, $W^5$ are independently from each other unsubstituted or substituted, straight chain or branched $C_1$-$C_{30}$ alkyl, in which one -CH- or -$CH_2$- group may be replaced by one or more linking group consisting of -O-, -S-, -$NR^1$-, -CH($OR^1$)-, -CO-$NR^1$-, -$NR^1$-CO-, -CO-O-, -O-CO-, -$SO_2$- or an aromatic group which is unsubstituted or substituted by one or more -F, -Cl or -OR' , or straight chain or branched, unsubstituted $C_1$-$C_8$ alkyl, or $C_1$-$C_6$ alkyl, which is substituted by one or more cyano group, one or more hydroxyl group or one or more halogen atoms, and wherein
$R^1$ represents hydrogen, straight chain or branched $C_1$-$C_8$ alkyl,
PG is a polymerizable group consisting of $CH_2$=CQ-COO-, wherein Q is hydrogen or methyl,
with the proviso that oxygen atoms of the linking groups are not directly linked to each other.

2. A composition according to claim 1, wherein said compositions in addition comprises at least one chiral polymerizable liquid crystalline compound or at least one chiral component.

3. Use of the composition according to any one of claims 1 or 2, for the preparation of a dichroic polymer network, a dichroic liquid crystalline polymer film (LCP film) or a dichroic liquid crystalline polymer gel.

4. Process for the preparation of a dichroic polymer network, a dichroic liquid crystalline polymer film (LCP film) or a dichroic liquid crystalline polymer gel, which process comprises polymerizing a composition as described in claim 1.

5. A dichroic polymer network, a dichroic liquid crystalline polymer film (LCP film) or a dichroic liquid crystalline polymer gel comprising a composition as described in any one of claims 1 or 2.

6. Use of a composition according to any one of claims 1 or 2 or a dichroic polymer network, a dichroic liquid crystalline polymer film (LCP film) or a dichroic liquid crystalline polymer gel according to claim 5 for the preparation of electro-optical and optical devices.

7. An electro-optical or optical device, comprising a dichroic polymer network a dichroic liquid crystalline polymer film (LCP film) or a dichroic liquid crystalline polymer gel according to claim 5.

8. An electro-optical or optical device according to claim 7, which is represented by a polarizer, an optical film, a security or an authentication device.

**Patentansprüche**

1. Eine Zusammensetzung umfassend einen dichroitschen Farbstoff mit der Formel (I) und mindestens ein Slave-Material, das ein Flüssigkristall oder ein polymerisierbarer Flüssigkristall ist,

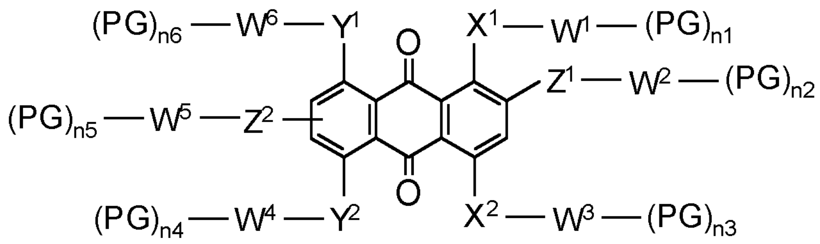

(I)

worin

$X^2$, $X^1$ unabhängig voneinander NR darstellen,
R Wasserstoff, unverzweigtes oder verzweigtes $C_1$-$C_8$-Alkyl darstellt,
$Y^1$, $Y^2$ unabhängig voneinander eine Einfachbindung darstellen,
$Z^1$ O ist,
$Z^2$ eine Einfachbindung darstellt,
n2 1 ist,
n1, n3, n4, n5, n6 0 sind,
$W^1$, $W^4$, $W^5$, $W^6$ Wasserstoff sind,
$W^2$, $W^3$ unabhängig voneinander nicht substituiertes oder substituiertes, geradkettiges oder verzweigtes $C_1$-$C_{30}$-Alkyl darstellen, bei dem eine -CH- oder -$CH_2$-Gruppe ersetzt sein kann durch eine oder mehrere Verknüpfungsgruppen bestehend aus -O-, -S-, -NR'-, -CH($OR^1$)-, -CO-$NR^1$-, -$NR^1$-CO-, -CO-O-, -O-CO-, -$SO_2$- oder eine aromatische Gruppe, die nicht substituiert oder substituiert ist durch eine oder mehrere von -F, -Cl oder -$OR^1$; geradkettiges oder verzweigtes, nicht substituiertes $C_1$-$C_8$-Alkyl, oder geradkettiges oder verzweigtes $C_1$-$C_8$-Alkyl, das durch eine oder mehrere Cyanogruppen, eine oder mehrere Hydroxylgruppen oder ein oder mehrere Halogenatome substituiert ist, und wobei
$R^1$ Wasserstoff oder geradkettiges oder verzweigtes, nicht substituiertes $C_1$-$C_8$-Alkyl, oder $C_1$-$C_8$-Alkyl darstellt, das durch eine oder mehrere Cyanogruppen, eine oder mehrere Hydroxylgruppen oder ein oder mehrere Halogenatome substituiert ist,
PG eine polymerisierbare Gruppe bestehend aus $CH_2$=CQ-COO- ist, wobei Q Wasserstoff oder Methyl ist; oder ein dichroitischer Farbstoff mit der Formel (I) ist, wobei
$X^1$ S ist,
$X^2$ eine Einfachbindung oder NR ist,
R Wasserstoff oder ein geradkettiges oder verzweigtes, nicht substituiertes $C_1$-$C_8$-Alkyl darstellt, oder $C_1$-$C_8$-Alkyl, das durch eine oder mehrere Cyanogruppen, eine oder mehrere Hydroxylgruppen oder ein oder mehrere Halogenatome substituiert ist,
$Y^1$ S ist,
$Y^2$ eine Einfachbindung oder NR darstellt,
$Z^1$, $Z^2$ Einfachbindungen sind,
n1, n6 1 sind,
n2, n3, n4, n5 0 sind,
$W^2$, $W^3$, $W^4$, $W^5$ Wasserstoff sind,
$W^1$, $W^6$ unabhängig voneinander nicht substituiertes oder substituiertes, geradkettiges oder verzweigtes $C_1$-$C_{30}$-Alkyl darstellen, bei dem eine -CH- oder -$CH_2$-Gruppe ersetzt sein kann durch eine oder mehrere Verknüpfungsgruppen bestehend aus -O-, -S-, -$NR^1$-, -CH($OR^1$)-, -CO-$NR^1$-, -$NR^1$-CO-, -CO-O-, -O-CO-, -$SO_2$- oder eine aromatische Gruppe, die nicht substituiert oder substituiert ist durch ein oder mehrere von geradkettiges oder verzweigtes $C_1$-$C_8$-Alkyl, -F, -Cl oder -$OR^1$, und wobei $R^1$ Wasserstoff darstellt, oder geradkettiges oder verzweigtes, nicht substituiertes $C_1$-$C_8$-Alkyl, oder $C_1$-$C_8$-Alkyl, das durch eine oder mehrere Cyanogruppen, eine oder mehrere Hydroxylgruppen oder ein oder mehrere Halogenatome substituiert ist,
PG eine polymerisierbare Gruppe bestehend aus $CH_2$=CQ-COO- ist, wobei Q Wasserstoff oder Methyl ist; oder ein dichroitischer Farbstoff mit der Formel (I) ist, wobei
$X^1$, $X^2$ unabhängig voneinander NR darstellen,
$Y^1$, $Y^2$ unabhängig voneinander NR darstellen,
R Wasserstoff oder geradkettiges oder verzweigtes, nicht substituiertes $C_1$-$C_8$-Alkyl, oder $C_1$-$C_8$-Alkyl darstellt, das durch eine oder mehrere Cyanogruppen, eine oder mehrere Hydroxylgruppen oder ein oder mehrere Halogenatome substituiert ist,
$Z^1$, $Z^2$ unabhängig voneinander eine Einfachbindung oder O darstellen,
n2, n5 1 sind,

n1, n3, n4, n6 0 sind,
$W^1$, $W^6$ Wasserstoff sind,
$W^2$, $W^3$, $W^4$, $W^5$ unabhängig voneinander nicht substituiertes oder substituiertes, geradkettiges oder verzweigtes $C_1$-$C_{30}$-Alkyl darstellen, bei dem ein oder mehrere -CH- oder -$CH_2$-Gruppen ersetzt sein können durch eine oder mehrere Verknüpfungsgruppen bestehend aus -O-, -S-, -$NR^1$-, -CH($OR^1$)-, -CO-$NR^1$-, -$NR^1$-CO-, -CO-O-, -O-CO-, -$SO_2$- oder eine aromatische Gruppe, die nicht substituiert ist oder substituiert ist durch ein oder mehrere von -F, -Cl oder -$OR^1$, oder geradkettiges oder verzweigtes, nicht substituiertes $C_1$-$C_8$-Alkyl, oder $C_1$-$C_8$-Alkyl, das durch eine oder mehrere Cyanogruppen, eine oder mehrere Hydroxylgruppen oder ein oder mehrere Halogenatome substituiert ist, und wobei
$R^1$ Wasserstoff, geradkettiges oder verzweigtes $C_1$-$C_8$-Alkyl darstellt,
PG eine polymerisierbare Gruppe bestehend aus $CH_2$=CQ-COO- ist, wobei Q Wasserstoff oder Methyl ist;
mit der Maßgabe, dass Sauerstoffatome der Verknüpfungsgruppen nicht direkt miteinander verbunden sind.

2. Eine Zusammensetzung gemäß Anspruch 1, wobei die Zusammensetzungen zusätzlich mindestens eine chirale polymerisierbare flüssigkristalline Verbindung oder zumindest eine chirale Komponente aufweisen.

3. Verwendung der Zusammensetzung gemäß irgendeinem der Ansprüche 1 oder 2 zur Herstellung eines dichroitischen Polymernetzwerkes, eines dichroitischen flüssigkristallinen Polymerfilms (LCP-Film) oder eines dichroitischen flüssigkristallinen Polymergels.

4. Verfahren zur Herstellung eines dichroitischen Polymernetzwerkes, eines dichroitischen flüssigkristallinen Polymerfilms (LCP-Film) oder eines dichroitischen flüssigkristallinen Polymergels, wobei das Verfahren die Polymerisation einer in Anspruch 1 beschriebenen Zusammensetzung umfasst.

5. Ein dichroitisches Polymernetzwerk, ein dichroitischer flüssigkristalliner Polymerfilm (LCP-Film) oder ein dichroitisches flüssigkristallines Polymergel umfassend eine in irgendeinem der Ansprüche 1 oder 2 beschriebene Zusammensetzung.

6. Verwendung einer Zusammensetzung gemäß irgendeinem der Ansprüche 1 oder 2, oder eines dichroitischen Polymernetzwerkes, eines dichroitischen flüssigkristallinen Polymerfilms (LCP-Film) oder eines dichroitischen flüssigkristallinen Polymergels gemäß Anspruch 5 zur Herstellung von elektrooptischen und optischen Vorrichtungen.

7. Eine elektrooptische oder optische Vorrichtung umfassend ein dichroitisches Polymernetzwerk, ein dichroitischer flüssigkristalliner Polymerfilm (LCP-Film) oder ein dichroitisches flüssigkristallines Polymergel gemäß Anspruch 5.

8. Eine elektrooptische oder optische Vorrichtung gemäß Anspruch 7, das einen Polarisator, einen optischen Film, ein Sicherheits- oder eine Authentifizierungsvorrichtung darstellt.

## Revendications

1. Composition comprenant un colorant dichroïque de formule (I) et au moins un matériau esclave qui est un cristal liquide ou un cristal liquide polymérisable,

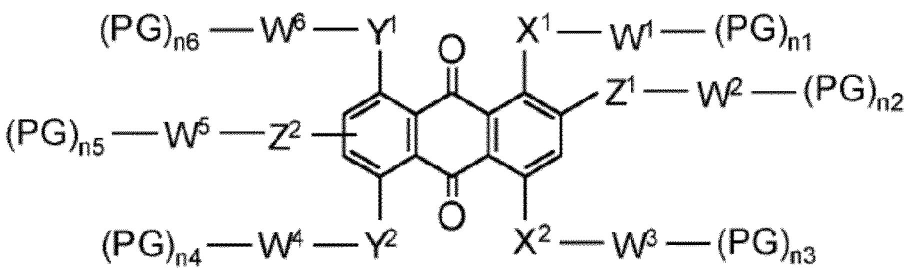

(I)

dans lequel

$X^2$, $X^1$ sont indépendamment l'un de l'autre NR,
R représente un atome d'hydrogène, un groupe alkyle en $C_1$ à $C_8$ non ramifié ou ramifié,

$Y^1$, $Y^2$ sont indépendamment l'un de l'autre une liaison simple,
$Z^1$ est O,
$Z^2$ est une liaison simple,
n2 vaut 1,
n1, n3, n4, n5, n6 valent 0,
$W^1$, $W^4$, $W^5$, $W^3$ sont un atome d'hydrogène,
$W^2$, $W^3$ sont indépendamment l'un de l'autre un groupe alkyle en $C_1$ à $C_{30}$ à chaîne linéaire ou ramifiée, non substitué ou substitué, dans lequel un groupe -CH- ou $-CH_2-$ peut être remplacé par un ou plusieurs groupes de liaison constitués par -O-, -S-, $-NR^1-$, $-CH(OR^1)-$, - $CO-NR^1-$, $-NR^1-CO-$, -CO-O-, -O-CO-, $-SO_2-$ ou un groupe aromatique qui est non substitué ou substitué par un ou plusieurs -F, -Cl ou $-OR^1$ ; un groupe alkyle en $C_1$ à $C_8$ non substitué à chaîne linéaire ou ramifiée ou un groupe alkyle en $C_1$ à $C_8$ à chaîne linéaire ou ramifiée, qui est substitué par un ou plusieurs groupes cyano, un ou plusieurs groupes hydroxyle ou un ou plusieurs atomes d'halogène, et dans lequel
$R^1$ est un atome d'hydrogène ou un groupe alkyle en $C_1$ à $C_8$ non substitué à chaîne linéaire ou ramifiée ou un groupe alkyle en $C_1$ à $C_8$, qui est substitué par un ou plusieurs groupes cyano, un ou plusieurs groupes hydroxyle ou un ou plusieurs atomes d'halogène,
PG est un groupe polymérisable constitué par $CH_2=CQ-COO-$, dans lequel Q est un atome d'hydrogène ou un groupe méthyle ; ou
un colorant dichroïque de formule (I), dans lequel
$X^1$ est S
$X^2$ est une liaison simple ou NR,
R représente un atome d'hydrogène ou un groupe alkyle en $C_1$ à $C_8$ non substitué à chaîne linéaire ou ramifiée ou un groupe alkyle en $C_1$ à $C_8$, qui est substitué par un ou plusieurs groupes cyano, un ou plusieurs groupes hydroxyle ou un ou plusieurs atomes d'halogène,
$Y^1$ est S,
$Y^2$ est une liaison simple ou NR,
$Z^1$, $Z^2$ sont une liaison simple,
n1, n6 valent 1,
n2, n3, n4, n5, valent 0,
$W_2$, $W^3$, $W^4$, $W^5$ sont un atome d'hydrogène,
$W^1$, $W^6$ sont indépendamment l'un de l'autre un groupe alkyle en $C_1$ à $C_{30}$ à chaîne linéaire ou ramifiée, non substitué ou substitué, dans lequel un groupe -CH- ou $-CH_2-$ peut être remplacé par un ou plusieurs groupes de liaison constitués par -O-, -S-, $-NR^1-$, $-CH(OR^1)-$, - $CO-NR^1-$, $-NR^1-CO-$, -CO-O-, -O-CO-, $-SO_2-$ ou un groupe aromatique qui est non substitué ou substitué par un ou plusieurs groupes alkyle en $C_1$ à $C_8$ à chaîne linéaire ou ramifiée, -F, -Cl ou $-OR^1$, et dans lequel
$R^1$ représente un atome d'hydrogène ou un groupe alkyle en $C_1$ à $C_8$ non substitué à chaîne linéaire ou ramifiée ou un groupe alkyle en $C_1$ à $C_8$, qui est substitué par un ou plusieurs groupes cyano, un ou plusieurs groupes hydroxyle ou un ou plusieurs atomes d'halogène,
PG est un groupe polymérisable constitué par $CH_2=CQ-COO-$, dans lequel Q est un atome d'hydrogène ou un groupe méthyle ; ou
un colorant dichroïque de formule (I), dans lequel
$X^2$, $X^1$ sont indépendamment l'un de l'autre NR,
$Y^1$, $Y^2$ sont indépendamment l'un de l'autre NR,
R représente un atome d'hydrogène ou un groupe alkyle en $C_1$ à $C_8$ non substitué à chaîne linéaire ou ramifiée ou un groupe alkyle en $C_1$ à $C_8$, qui est substitué par un ou plusieurs groupes cyano, un ou plusieurs groupes hydroxyle ou un ou plusieurs atomes d'halogène,
$Z^2$, $Z^1$ sont indépendamment l'un de l'autre une liaison simple ou O,
n2, n5 valent 1,
n1, n3, n4, n6 valent 0,
$W^1$, $W^6$ sont un atome d'hydrogène,
$W^2$, $W^3$, $W^4$, $W^5$ sont indépendamment les uns des autres un groupe alkyle en $C_1$ à $C_{30}$ à chaîne linéaire ou ramifiée, non substitué ou substitué, dans lequel un groupe -CH- ou $-CH_2-$peut être remplacé par un ou plusieurs groupes de liaison constitués par -O-, -S-, $-NR^1-$, - $CH(OR^1)-$, $-CO-NR^1-$, $-NR^1-CO-$, -CO-O-, -O-CO-, $-SO_2-$ ou un groupe aromatique qui est non substitué ou substitué par un ou plusieurs -F, -Cl ou $-OR^1$, ou un groupe alkyle en $C_1$ à $C_8$ non substitué à chaîne linéaire ou ramifiée ou un groupe alkyle en $C_1$ à $C_8$, qui est substitué par un ou plusieurs groupes cyano, un ou plusieurs groupes hydroxyle ou un ou plusieurs atomes d'halogène, et dans lequel
$R^1$ représente un atome d'hydrogène, un groupe alkyle en $C_1$ à $C_8$ à chaîne linéaire ou ramifiée,

PG est un groupe polymérisable constitué par $CH_2$=CQ-COO-, dans lequel Q est un atome d'hydrogène ou un groupe méthyle,
à condition que les atomes d'oxygène des groupes de liaison ne soient pas directement liés les uns aux autres.

**2.** Composition selon la revendication 1, dans laquelle ladite composition comprend en outre au moins un composé cristallin liquide polymérisable chiral ou au moins un composant chiral.

**3.** Utilisation de la composition selon l'une quelconque des revendications 1 ou 2, pour la préparation d'un réseau de polymère dichroïque, d'un film de polymère cristallin liquide dichroïque (film LCP) ou d'un gel de polymère cristallin liquide dichroïque.

**4.** Procédé de préparation d'un réseau de polymère dichroïque, d'un film de polymère cristallin liquide dichroïque (film LCP) ou d'un gel de polymère cristallin liquide dichroïque, lequel procédé comprend la polymérisation d'une composition telle que décrite dans la revendication 1.

**5.** Réseau de polymère dichroïque, film de polymère cristallin liquide dichroïque (film LCP) ou gel de polymère cristallin liquide dichroïque comprenant une composition telle que décrite dans l'une quelconque des revendications 1 ou 2.

**6.** Utilisation d'une composition selon l'une quelconque des revendications 1 ou 2 ou d'un réseau de polymère dichroïque, d'un film de polymère cristallin liquide dichroïque (film LCP) ou d'un gel de polymère cristallin liquide dichroïque selon la revendication 5 pour la préparation de dispositifs électro-optiques et de dispositifs optiques.

**7.** Dispositif électro-optique ou optique, comprenant un réseau de polymère dichroïque, un film de polymère cristallin liquide dichroïque (film LCP) ou un gel de polymère cristallin liquide dichroïque selon la revendication 5.

**8.** Dispositif électro-optique ou optique selon la revendication 7, qui est représenté par un polariseur, un film optique, une sécurité ou un dispositif d'authentification.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1256602 A
- US 2055049425 A
- EP 0331233 A
- WO 9524454 A
- US 5567349 A
- US 5650534 A
- WO 0004110 A
- WO 0007975 A
- WO 0048985 A
- WO 0055110 A
- WO 0063154 A
- WO 2011003846 A
- US 5389698 A
- US 5838407 A
- US 5602661 A
- US 6160597 A
- US 6144428 A
- WO 9964924 A
- US 6258974 B
- EP 1174411 A
- EP 0611786 A
- WO 9610049 A
- EP 0763552 A
- US 6107427 A
- WO 201208504 A